(19)

Europäisches
Patentamt
European
Patent Office
Office européen
des brevets

(11) **EP 2 360 963 A1**

(12) **EUROPEAN PATENT APPLICATION**
published in accordance with Art. 153(4) EPC

(43) Date of publication:
**24.08.2011 Bulletin 2011/34**

(51) Int Cl.:
**H04W 28/18** (2009.01)

(21) Application number: **09833153.1**

(22) Date of filing: **08.12.2009**

(86) International application number:
**PCT/JP2009/006686**

(87) International publication number:
**WO 2010/070843 (24.06.2010 Gazette 2010/25)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.12.2008 JP 2008320862**

(71) Applicant: **NEC Corporation
Minato-ku
Tokyo 108-8001 (JP)**

(72) Inventor: **ICHIKAWA, Masaki
Tokyo 108-8001 (JP)**

(74) Representative: **Glawe, Delfs, Moll
Patent- und Rechtsanwälte
Postfach 26 01 62
80058 München (DE)**

(54) **WIRELESS COMMUNICATIONS SYSTEM AND WIRELESS DEVICE**

(57)    A wireless communications system and a wireless device are provided which can ensure a satisfactory line quality even when the characteristics of a transmission path are being steeply deteriorated. The wireless device measures a state indicating the characteristics of a transmission path, determines whether or not switching of a modulation scheme is required based on the state, and if the switching of the modulation scheme is required, determines a modulation scheme after the switching in accordance with the state and a value of a change amount of the state, switches a demodulation scheme to one corresponding to the modulation scheme after the switching, and adds information indicating the modulation scheme after the switching to a frame to be transmitted to a wireless device which is a communication partner. Additionally, the wireless device extracts the information indicating the modulation scheme after the switching from a frame which is received from the wireless device which is the communication partner, and switches a modulation scheme to the modulation scheme after the switching in accordance with the extracted information.

FIG. 1

**Description**

TECHNICAL FIELD

The present invention relates to wireless communications systems and wireless devices which transmit and receive wireless signals.

BACKGROUND ART

In recent digital-microwave wireless communications systems, a quadrature amplitude modulation (QAM) scheme is employed as a modulation scheme because the frequency utilization efficiency is satisfactory, and a technique of adaptively changing a modulation level depending on a state of a transmission path is used (see, for example, Patent Document 1).

In a digital-microwave wireless communications system recited in this Patent Document 1, a wireless device which has received a wireless signal measures a reception level, determines whether or not switching of a modulation level is required in accordance with the reception level, and notifies a wireless device that is a communication partner of a required modulation level if the switching is required, thereby the respective wireless devices switch their modulation levels.

Prior Art Document

Patent Document

Patent Document 1: Japanese Unexamined Patent Application, First Publication No. 2007-221357

DISCLOSURE OF THE INVENTION

Problems to be solved by the Invention

The above-described wireless communications system of Patent Document 1 determines the required modulation level from the value of the reception level at the time of the measurement. Therefore, when, for example, the characteristics of the transmission path are being steeply deteriorated due to attenuation by rain or the like, there is a possibility that switching to a modulation level that is suitable for the state of the transmission path is delayed and thus a sufficient line quality cannot be ensured.

Additionally, in the wireless communications system described in Patent Document 1, only one of two wireless devices which transmit and receive wireless signals monitors the reception level. For this reason, when one of the wireless devices notifies the other wireless device, which is a communication partner, of the modulation level, if the characteristics of the transmission path are deteriorated due to fading or the like, there is a possibility that the modulation level cannot be notified to the other wireless device and the modulation scheme cannot be switched, so that a satisfactory line quality cannot be ensured.

The present invention has been made in order to solve the problems caused by the foregoing technology, and an exemplary object thereof is to provide a wireless communications system and a wireless device which can ensure a satisfactory line quality even when the characteristics of a transmission path are being steeply deteriorated.

Means for Solving the Problems

In order to achieve the foregoing exemplary object, a wireless communications system in accordance with the present invention includes: a first wireless device; and a second wireless device which is a communication partner of the first wireless device, wherein the first wireless device measures a state indicating the characteristics of a transmission path, determines whether or not switching of a modulation scheme is required based on the state, and if the switching of the modulation scheme is required, determines a modulation scheme after the switching in accordance with the state and a value of a change amount of the state, switches a demodulation scheme to one corresponding to the modulation scheme after the switching, and transmits information indicating the modulation scheme after the switching to the second wireless device, and the second wireless device switches a modulation scheme to the modulation scheme after the switching in accordance with the information indicating the modulation scheme after the switching which is received from the first wireless device.

Moreover, a wireless device in accordance with the present invention includes: a state measuring unit which measures a state indicating the characteristics of a transmission path; a modulation scheme determining unit which determines whether or not switching of a modulation scheme is required based on the state measured by the state measuring unit, and if the switching of the modulation scheme is required, determines a modulation scheme after the switching in accordance with the state and a value of a change amount of the state, switches a demodulation scheme to one corresponding to the modulation scheme after the switching, and adds information indicating the modulation scheme after the switching to a frame to be transmitted to a wireless device which is a communication partner; and a modulation scheme controlling unit which extracts information indicating the modulation scheme after the switching from a frame received from the wireless device which is the communication partner, and switches a modulation scheme to the modulation scheme after the switching in accordance with the extracted information.

Furthermore, an adaptive modulation method according to the present invention includes: measuring a state indicating the characteristics of a transmission path; determining whether or not switching of a modulation scheme is required based on the state; if the switching of the modulation scheme is required, determining a modulation scheme after the switching in accordance with the state and a value of a change amount of the state, switching a demodulation scheme to one corresponding to the modulation scheme after the switching, and transmitting information indicating the modulation scheme after the switching to a wireless device which is a communication partner; and upon receipt of the information indicating the modulation scheme after the switching from the wireless device which is the communication partner, switching a modulation scheme to the modulation scheme after the switching.

Effect of the Invention

In accordance with the present invention, a satisfactory line quality can be ensured even when the characteristics of a transmission path are being steeply deteriorated. In addition, since the satisfactory line quality can be ensured even when a reception level used for a determination of switching a modulation scheme is reduced (i.e., even when a margin amount from a required reception level is reduced), the reception level used for the determination of the switching can be reduced even when the modulation scheme remains uncharged, and thus it is possible to extend a propagation distance while ensuring a line quality.

BRIEF DESCRIPTION OF THE DRAWING

FIG. 1 is a block diagram showing an example of a structure of a wireless communications system in accordance with an exemplary embodiment of the present invention.
FIG. 2 is a flowchart showing a procedure of determining a modulation scheme which is performed in a modulation scheme determining unit shown in FIG. 1.
FIG. 3 is a schematic diagram showing an example of a situation in which a modulation scheme is switched depending on a reception level.
FIG. 4 is a block diagram showing another example of the structure of the wireless communications system in accordance with the exemplary embodiment of the present invention.

MODE FOR CARRYING OUT THE INVENTION

Next, an exemplary embodiment of the present invention will be described with reference to the drawings.

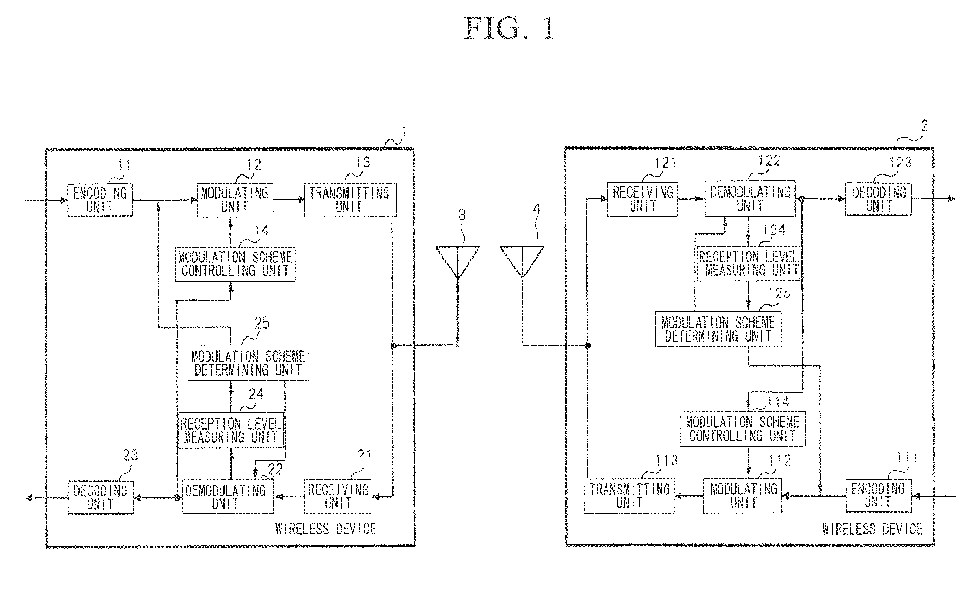

FIG. 1 is a block diagram showing an example of a structure of a wireless communications system in accordance with the exemplary embodiment of the present invention.

The wireless communications system in accordance with the present exemplary embodiment has a structure which includes wireless devices 1 and 2 which transmit and receive data as frames.

As shown in FIG. 1, the wireless device 1 is provided with an encoding unit 11, a modulating unit 12, a transmitting unit 13, a modulation scheme controlling unit 14, a receiving unit 21, a demodulating unit 22, a decoding unit 23, a reception level measuring unit 24, and a modulation scheme determining unit 25.

Additionally, the wireless device 2 is provided with an encoding unit 111, a modulating unit 312, a transmitting unit 113, a modulation scheme controlling unit 114, a receiving unit 121, a demodulating unit 122, a decoding unit 123, a reception level measuring unit 124, and a modulation scheme determining unit 125.

The structures of the wireless device 1 and the wireless device 2 shown in FIG. 1 are the same as each other. Therefore, hereinafter, respective structural elements provided in the wireless devices 1 and 2 will be described taking the wireless device 1 as an example.

The encoding unit 11 encodes data to be transmitted.

The modulating unit 12 modulates data encoded by the encoding unit 11 with a modulation scheme designated by the modulation scheme controlling unit 14 and outputs a modulated wireless signal.

The transmitting unit 13 transmits the wireless signal modulate by the modulating unit 12 through an antenna 3.

The receiving unit receivers a wireless signal transmitted from the transmitting unit 113 in the wireless device 2 through the antenna 3.

The demodulating unit 22 demodulates the wireless signal received by the receiving unit 21 with a demodulation scheme corresponding to the modulation scheme determined by the modulation scheme determining unit 25, and outputs a demodulated signal.

The decoding unit 23 decoded the signal demodulated by the demodulating unit 22.

The reception level measuring unit 24 measures a reception level of the received signal based on the signal demodulated by the demodulating unit 22.

The modulation scheme determining unit 25 determines whether or not switching of the modulation scheme is required based on the reception level measured by the reception level measuring unit 24, and determines an optimum modulation scheme depending on the reception level and the value of a change amount thereof if the switching of the modulation scheme is required. Upon determination of the modulation scheme, the modulation scheme determining unit 25 switches a demodulation scheme to be used by the demodulating unit 22 to one corresponding to the determined modulation scheme, and adds information indicating the modulation scheme after the switching and information indicating a switch timing thereof to a frame to be transmitted to the wireless device 2.

Upon receipt of a wireless signal from the wireless device 2, the modulation scheme controlling unit 14 extracts the information indicating the modulation scheme and the information indicating the switch timing thereof from a received frame, and switches the modulation scheme to be used by the modulating unit 12 in accordance with the extracted information.

The same functions as those described above are provided by the encoding unit 111, the modulating unit 112, the transmitting unit 113, the modulation scheme controlling unit 114, the receiving unit 121, the demodulating unit 122, the decoding unit 123, the reception level measuring unit 124, and the modulation scheme determining unit 125, which are provided in the wireless device 2, as well as an antenna 4, and thus a description thereof is omitted herein.

The wireless devices 1 and 2 shown in FIG. 1 are realized by using well-known components such as a power amplifier, a low noise amplifier (LNA), a variety of logic circuits, a digital to analog (D/A) converter, an analog to digital (A/D) converter, and a central processing unit (CPU) and a digital signal processor (DSP), which operate in accordance with a program.

Hereinafter, an operation of the wireless communications system in accordance with the present exemplary embodiment will be described taking a case in which data is transmitted from the wireless device 1 to the wireless device 2 as an example.

In the wireless device 2, upon receipt of a wireless signal transmitted from the wireless device 1 with the receiving unit 121, the demodulating unit 122 demodulates the received wireless signal.

The reception level measuring unit 124 measures a reception level of the received wireless signal using a signal output from the demodulating unit 122, and outputs it to the modulation scheme determining unit 125.

The modulation scheme determining unit 125 determines whether or not switching of a modulation scheme is required based on the value of the reception level received from the reception level measuring unit 124, and calculates a change amount of the reception level. If the switching of the modulation scheme is required, the modulation scheme determining unit 125 determines a modulation scheme after the switching depending on the reception level and the value of the change amount. Upon determination of the modulation scheme, the modulation scheme determining unit 125 switches a demodulation scheme of the demodulating unit 122 to one corresponding to the determined modulation scheme at a predetermined timing (i.e., a switch timing described below). Additionally, in order to notify the wireless device 1, which is a communication partner, of the determined modulation scheme, the modulation scheme determining unit 125 adds, to a header portion of a frame to be transmitted from the wireless device 2, information indicating the modulation scheme after the switching and information indicating a switch timing for synchronizing the switching of the modulation scheme and the demodulation scheme between a transmitting end and a receiving end, and transmits the frame, to which these pieces of information are added, to the wireless device 1.

In the wireless device 1, the modulation scheme controlling unit 14 extracts the information indicating the modulation scheme and the information indicating the switch timing, which are added to the header portion of the frame transmitted from the wireless device 2, and switches a modulation scheme of the modulating unit 12 to the designated scheme at the designated timing in accordance with the extracted information.

Similarly, in the wireless device 1, the modulation scheme determining unit 25 determines a modulation scheme based on the reception level and a change amount thereof, switches a demodulation scheme of the demodulating unit 22 to one corresponding to the determined modulation scheme, adds information indicating the modulation scheme and information indicating a switch timing to a frame to be transmitted to the wireless device 2, and transmits them. In this case, the wireless device 2 extracts the information indicating the modulation scheme and the information indicating the switch timing from the frame received from the wireless device 1, and switches a modulation scheme of the modulating unit 12 to the designated modulation scheme at the designated timing in accordance with the extracted information.

The wireless devices 1 and 2, which are provided in the wireless communications system in accordance with the present exemplary embodiment, measure respective reception levels, and respectively switch a modulation scheme used for transmission from the wireless device 1 to the wireless device 2 and a modulation scheme used for transmission from the wireless device 2 to the wireless device 1 independent of each other depending on the reception levels and change amounts thereof. That is, the wireless devices 1 and 2 in accordance with the present exemplary embodiment are configured to allow the use of different modulation schemes for transmission and reception.

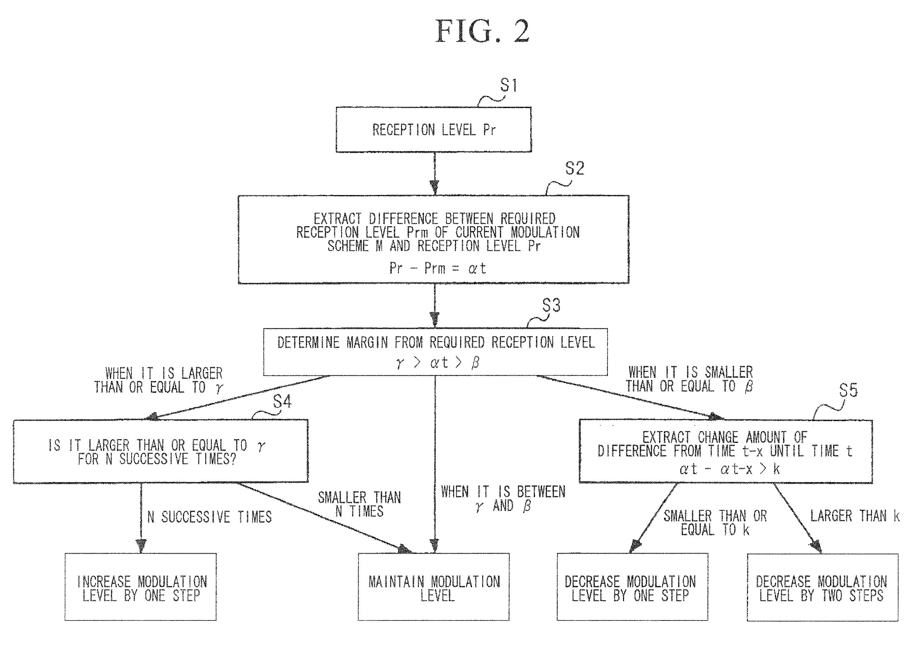

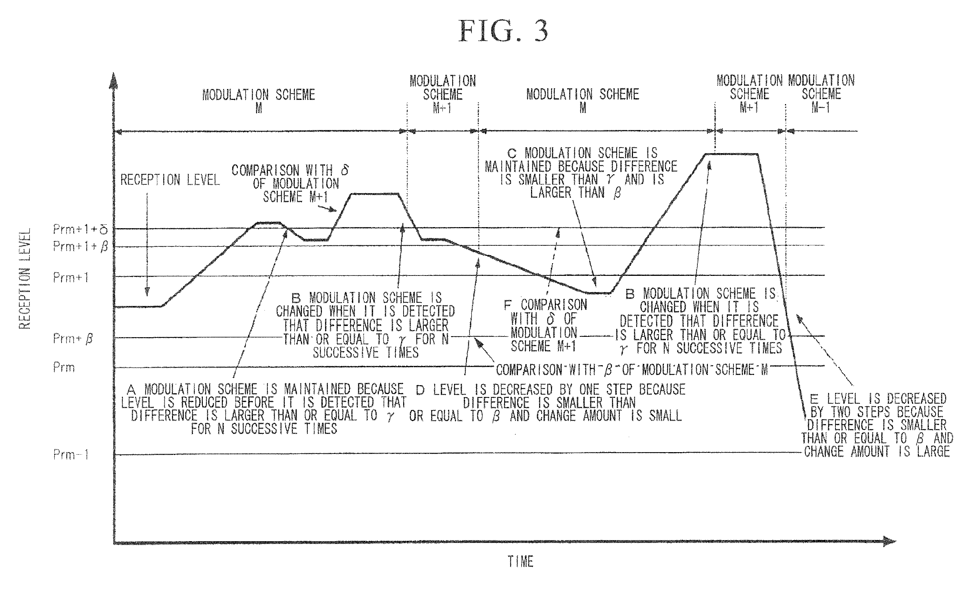

Next, a method for determining a modulation scheme performed in the modulation scheme determining units shown in FIG. 1 will be described with reference to FIG. 2 and FIG. 3.

FIG. 2 is a flowchart showing a procedure of determining a modulation scheme performed in the modulation scheme determining units shown in FIG. 1. In addition, FIG. 3 is a schematic diagram showing an example of a situation in which a modulation scheme is switched depending on a reception level.

It is to be noted that although the following describes a method for determining a modulation scheme taking the modulation scheme determining unit 125 provided in the wireless device 2 as an example, the modulation scheme determining unit 25 provided in the wireless device 1 also determines the modulation scheme in accordance with a similar procedure.

Moreover, although the following describes an example in which a modulation level of a QAM scheme is switched depending on a reception level and a change amount thereof, a binary phase shift keying (BPSK) scheme and/or a quadrature phase shit keying (QPSK) scheme may also be used jointly as modulation schemes. Generally, The order of reception levels necessary to ensure a predetermined line quality with the respective modulation schemes are BPSK, QPSK, and YAM in ascending order, and, in terms of the QAM scheme, the lower the modulation level is, the lower the required reception level is.

First, upon receipt of a value Pr of a measured reception level from the reception level measuring unit 124 (step S1), the modulation scheme determining unit 125 compares the value Pr of the reception level with a value Prm of a reception level required for a current modulation scheme M and calculates a difference $\alpha t$ between Pr and Prm (step S2).

Subsequently, the modulation scheme determining unit 125 determines a margin from the reception level required for the current modulation scheme M (step S3). Values $\gamma$ and preset for each modulation scheme as well as at are used in determining the margin.

Here, $\gamma$ is an index value used for determining whether or not the modulation level can be increased because of a sufficiently high reception level, and the hollowing value is used.

$$\gamma = Prm+1 - Prm+\delta \quad \cdots \quad (\delta: \text{a margin amount})$$

where Prm+1 denotes a reception level required when the modulation level is increased by one step (e.g., 128 QAM when the current modulation scheme is 64 QAM).

$\beta$ is an index value used for determining whether or not the modulation level should be decreased because of a low reception level.

That is, the modulation scheme determining unit 125 determines whether or not the difference $\alpha t$ between Pr and Prm is greater than $\beta$ and also determines whether or not the difference at between Pr and Prm is less than Prm+1 - Prm + $\delta$ (i.e., $\gamma$) (F in FIG. 3).

Here, if the difference $\alpha t$ between Pr and Prm is greater than or equal to $\gamma$ (step S4), a satisfactory line quality can be ensured even when the modulation level is further increased by one step than that of the current modulation scheme (e.g., 128 QAM when the current modulation scheme is 64 QAM). For this reason, the modulation scheme determining unit 125 changes the modulation level to a larger value by one step.

However, the modulation scheme determining unit 125 increases the modulation level if a situation in which the difference $\alpha t$ between Pr and Prm is greater than or equal to $\gamma$ successively occurs N times at a predetermined processing cycle (B in FIG. 3). It is to be noted that it is assumed that N is a preset positive integer. Performing such a process makes it possible to avoid a situation in which a process of switching a modulation level and a process of restoring the modulation level from a switched value to an original value are repeated when the state of a line is unstable. If the situation in which the difference $\alpha t$ between Pr and Prm is greater than or equal to $\gamma$ does not successively occur N times, the modulation scheme determining unit 125 maintains the current modulation scheme (A in FIG. 3).

Upon completion of the switching of the modulation level, the modulation scheme determining unit 125 repeats the same process as that described above using the value of $\gamma$ corresponding to the switched modulation level. In this case, the use of an optimum value of the margin amount δ from the switched modulation level makes it possible to avoid a situation in which a process of switching a modulation level and a process of restoring the modulation level from a switched value to an original value are repeated as a result of the unstable state of a line.

If the difference $\alpha t$ between Pr and Prm is a value between β and γ (step S3), the current modulation scheme is optimum for the current state of the line, and thus the modulation scheme determining unit 125 maintains the current modulation scheme as it is (C in FIG. 3).

If the difference $\alpha t$ between Pr and Prm is less than or equal to β (step S3), the characteristics of a transmission path is deteriorated, and thus a satisfactory line quality cannot be ensured with the current modulation scheme. For this reason, the modulation scheme determining unit 125 decreases the modulation level.

The value of β can be set to any value. Appropriate setting of the value of β makes it possible to switch the modulation scheme at an appropriate timing and to switch the modulation level to an optimum value.

Furthermore, in order to determine whether the characteristics of the transmission path are being steeply deteriorated or they are being gradually deteriorated, the modulation scheme determining unit 125 calculates the difference (a change amount) between the difference $\alpha t$ between Pr and Prm at a current time t and a difference $\alpha t\text{-}x$ between Pr and Prm at a past time t-x (step S5).

The present exemplary embodiment changes a method for switching a modulation scheme depending on whether or not this change amount is less than or equal to a preset reference value k.

This reference value k can also be set to any value. Appropriate setting of the value k makes it possible to switch the modulation scheme at an appropriate timing and to switch the modulation level to an optimum value.

If the change amount is less than or equal to k, it is determined that a line quality is being gradually deteriorated, and thus the modulation scheme determining unit 125 changes the current modulation scheme to a modulation scheme in which the modulation level is decreased by one step than that of the current modulation scheme (e.g., 64 QAM when the current modulation scheme is 128 QAM) (D in FIG. 3).

In contrast, if the change amount is greater than k, it is determined that the line quality is being steeply deteriorated, and thus the modulation scheme determining unit 125 changes the current modulation scheme to a modulation scheme in which the modulation level is decreased by two steps than that of the current modulation scheme (e.g., 32 QAM when the current modulation scheme is 128 QAM) (E in FIG. 3).

The reason why the modulation level is decreased by two steps, rather than by one step, will be described below.

As described above, if the modulation scheme determining unit 125 determines the switching of the modulation scheme, it is necessary for the wireless device 2, which is provided with the modulation scheme determining unit 125, to notify the wireless device 1, which is a communication partner, of the determined modulation scheme. The wireless device 2 transmits a frame to be transmitted with information indicating the modulation scheme and information indicating a switch timing attached thereto. The wireless device 1 extracts these pieces of information from a received frame and switches the modulation scheme of the modulating unit 12 to the designated scheme in accordance with the information. As a result, a delay is generated from when the reception level is measured until when the modulation scheme and demodulation scheme are switched in each of the wireless devices 1 and 2.

Accordingly, when the characteristics of the transmission path are being steeply deteriorated even when the modulation level is decreased by one step, the switched reception level may be lower than a reception level required for the modulation scheme, and thus there is a possibility that a predetermined line quality cannot be obtained.

Therefore, when the change amount is greater than k, the wireless communications system in accordance with the present exemplary embodiment determines that the characteristics of the transmission path are being steeply deteriorated and decreases the modulation level by two steps. If the modulation level is decreased by two steps in this manner, the transmission capacity is reduced, but a satisfactory line quality can be ensured. It is to be noted that the number of steps of decreasing the modulation level is not limited to two steps, and it may be three or more steps.

The present exemplary embodiment switches a modulation scheme depending on a reception level and a change amount thereof, and thus it is possible to ensure a satisfactory line quality even when the characteristics of a transmission path are being steeply deteriorated.

In the case in which a change amount of a reception level is not used for switching a modulation scheme, it is necessary to switch the modulation scheme earlier in order to ensure a satisfactory line quality even when the characteristics of a transmission path are being steeply deteriorated. To this end, it is necessary to switch the modulation scheme upon detection of a reception level having a sufficient margin amount from a required reception level.

In contrast, the present exemplary embodiment can ensure a satisfactory line quality even when a reception level used for a determination of switching a modulation scheme is reduced (i.e., even when a margin amount from a required reception level is reduced). Therefore, the reception level used for the determination of switching the modulation scheme can be reduced even when the modulation scheme remains unchanged, and thus it is possible to extend a propagation distance while ensuring the line quality.

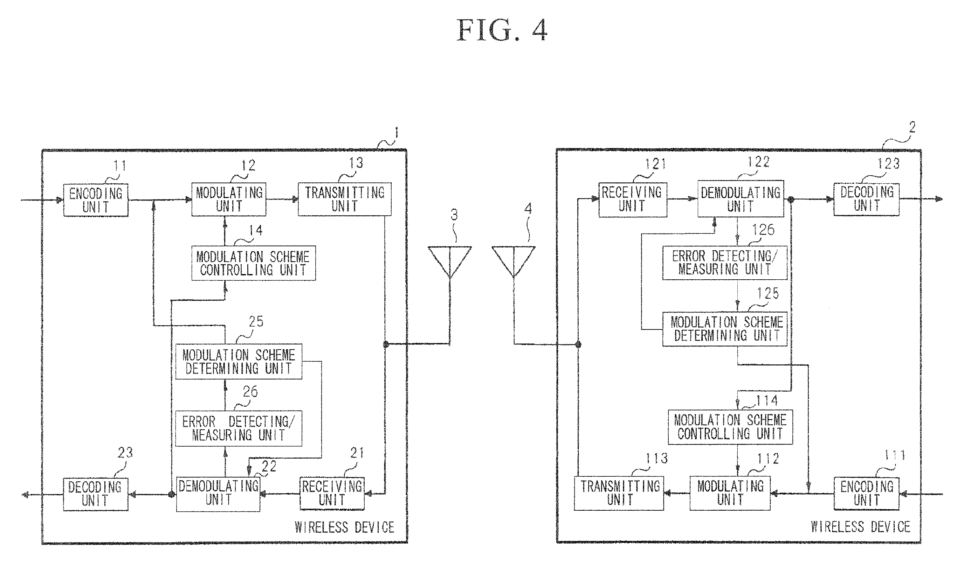

It is to be noted that the foregoing description shows an example in which a reception level is monitored to obtain a state of the characteristics of a transmission path. However, the state indicating the characteristics of the transmission path is not limited to a reception level. For example, in a wireless communications system including error correcting means, as shown in FIG. 4, error detecting/measuring units 26 and 126 are provided which detect the number of syndrome errors in wireless signals per predetermined time, in place of the reception level measuring units 24 and 124, which are one form of a state measuring unit which measures the state indicating the characteristics of the transmission path. Then, the modulation scheme is switched using the number of the syndrome errors thus measured and a change amount thereof in the same manner as described above. As a result, the same exemplary advantages as those described above can be obtained.

While the present invention has been particularly shown and described with reference to exemplary embodiments thereof, the present invention is not limited to those exemplary embodiments. It will be understood by those of ordinary skill in the art that various changes in form and details may be made therein without departing from the spirit and scope of the present invention as defined in the claims.

For example, a program for realising the processing of the respective units that configure a wireless device may be recorded on a computer-readable recording medium, and the program recorded on this recording medium may be read in a computer and executed, thereby performing the above-described processing.

This application is based upon and claims the benefit of priority from Japanese Patent Application No. 2008-320862, filed on December 17, 2008, the disclosure of which is incorporated herein in its entirety by reference.

Industrial Applicability

The present invention is applicable to wireless communications systems and wireless devices which transmit and receive wireless signals. In accordance with the present invention, a satisfactory line quality can be ensured even when the characteristics of a transmission path are being steeply deteriorated. In addition, since the satisfactory line quality can be ensured even when a reception level used for a determination of switching a modulation scheme is reduced (i.e., even when a margin amount from a required reception level is reduced), the reception level used for the determination of the switching can be reduced even when the modulation scheme remains unchanged, and thus it is possible to extend a propagation distance while ensuring the line quality. Description of Reference Numerals

1, 2 wireless device
11, 111 encoding unit
12, 112 modulating unit
13, 113 transmitting unit
14, 114 modulation scheme controlling unit
21, 121 receiving unit
22, 122 demodulating unit
23, 123 decoding unit
24, 124 reception level measuring unit
25, 125 modulation scheme determining unit
26, 126 error detecting/measuring unit

**Claims**

1. A wireless communications system comprising:

   a first wireless device; and
   a second wireless device which is a communication partner of the first wireless device,
   wherein the first wireless device measures a state indicating the characteristics of a transmission path, determines whether or not switching of a modulation scheme is required based on the state, and if the switching of the modulation scheme is required, determines a modulation scheme after the switching in accordance with the state and a value of a change amount of the state, switches a demodulation scheme to one corresponding to the modulation scheme after the switching, and transmits information indicating the modulation scheme after the switching to the second wireless device, and
   the second wireless device switches a modulation scheme to the modulation scheme after the switching in accordance with the information indicating the modulation scheme after the switching which is received from the first wireless device.

2. The wireless communications system according to claim 1, wherein the first wireless device transmits information indicating a switch timing together with the information indicating the modulation scheme after the switching to the second wireless device, and
the second wireless device switches the modulation scheme at the switch timing in accordance with the information indicating the switch timing which is received from the first wireless device.

3. The wireless communications system according to claim 1 or 2, wherein the first wireless device determines a modulation scheme in which a modulation level is decreased by one step as the modulation scheme after the switching when the value of the change amount of the state is less than or equal to a preset reference value, and determines a modulation scheme in which a modulation level is decreased by two or more steps as the modulation scheme after the switching when the value of the change amount of the state is greater than the reference value.

4. The wireless communications system according to any one of claims 1 to 3, wherein a modulation scheme used for transmission from the first wireless device to the second wireless device and a modulation scheme used for transmission from the second wireless device to the first wireless device are switched independent of each other.

5. A wireless device comprising:

a state measuring unit which measures a state indicating the characteristics of a transmission path;
a modulation scheme determining unit which determines whether or not switching of a modulation scheme is required based on the state measured by the state measuring unit, and if the switching of the modulation scheme is required, determines a modulation scheme after the switching in accordance with the state and a value of a change amount of the state, switches a demodulation scheme to one corresponding to the modulation scheme after the switching, and adds information indicating the modulation scheme after the switching to a frame to be transmitted to wireless device which is a communication partner; and
a modulation scheme controlling unit which extracts information indicating the modulation scheme after the switching from a frame received from the wireless device which is the communication partner, and switches a modulation scheme to the modulation scheme after the switching in accordance with the extracted information.

6. The wireless device according to claim 5, wherein the modulation scheme determining unit adds information indicating a switch timing together with the information indicating the modulation scheme after the switching to the frame to be transmitted to the wireless device which is the communication partner, and
the modulation scheme controlling unit switches the modulation scheme at the switch timing in accordance with the information indicating the switch timing which is received from the wireless device which is the communication partner.

7. The wireless device according to claim 6, wherein the switch timing is a timing for synchronizing switching of the demodulation scheme and switching of the modulation scheme between the wireless device and the wireless device which is the communication partner.

8. The wireless device according to any one of claims 5 to 7, wherein the modulation scheme determining unit determines a modulation scheme in which a modulation level is decreased by one step as the modulation scheme after the switching when the value of the change amount of the state is less than or equal to a preset reference value, and determines a modulation scheme in which a modulation level is decreased by two or more steps as the modulation scheme after the switching when the value of the change amount of the state is greater than the reference value.

9. The wireless device according to any one of claims 5 to 8, wherein the state indicating the characteristics of the transmission path is a reception level of a wireless signal

10. The wireless device according to any one of claims 5 to 8, wherein the state indicating the characteristics of the transmission path is the number of syndrome errors per predetermined time in a wireless signal.

11. An adaptive modulation method comprising:

measuring a state indicating the characteristics of a transmission path;
determining whether or not switching of a modulation scheme is required based on the state;
if the switching of the modulation scheme is required, determining a modulation scheme after the switching in accordance with the state and a value of a change amount of the state, switching a demodulation scheme to one corresponding to the modulation scheme after the switching, and transmitting information indicating the modulation scheme after the switching to a wireless device which is a communication partner; and

upon receipt of the information indicating the modulation scheme after the switching from the wireless device which is the communication partner, switching a modulation scheme to the modulation scheme after the switching.

**12.** The adaptive modulation method according to claim 11, comprising:

transmitting information indicating a switch timing together with the information indicating the modulation scheme after the switching to the wireless device which is the communication partner; and
upon receipt of the information indicating the switch timing from the wireless device which is the communication partner, switching the modulation scheme at the switch timing.

**13.** The adaptive modulation method according to claim 11 or 12, comprising
when the value of the change amount of the state is less than or equal to a preset preference value, determining a modulation scheme in which a modulation level is decreased by one step as the modulation scheme after the switching; and
when the state is greater than the reference value, determining a modulation scheme in which a modulation level is decreased by two or more steps as the modulation scheme after the switching.

FIG. 1

EP 2 360 963 A1

# FIG. 2

S1

```
RECEPTION LEVEL Pr
```

S2

```
EXTRACT DIFFERENCE BETWEEN REQUIRED
RECEPTION LEVEL Prm OF CURRENT MODULATION
SCHEME M AND RECEPTION LEVEL Pr
Pr − Prm = αt
```

S3

```
DETERMINE MARGIN FROM REQUIRED RECEPTION LEVEL
γ > αt > β
```

WHEN IT IS LARGER
THAN OR EQUAL TO γ

WHEN IT IS SMALLER
THAN OR EQUAL TO β

S4

```
IS IT LARGER THAN OR EQUAL TO γ
FOR N SUCCESSIVE TIMES?
```

S5

```
EXTRACT CHANGE AMOUNT OF
DIFFERENCE FROM TIME t−x UNTIL TIME t
αt − αt−x > k
```

N SUCCESSIVE TIMES

SMALLER THAN
N TIMES

WHEN IT IS BETWEEN
γ AND β

SMALLER THAN OR
EQUAL TO k

LARGER THAN k

```
INCREASE MODULATION
LEVEL BY ONE STEP
```

```
MAINTAIN MODULATION
LEVEL
```

```
DECREASE MODULATION
LEVEL BY ONE STEP
```

```
DECREASE MODULATION
LEVEL BY TWO STEPS
```

EP 2 360 963 A1

# FIG. 3

FIG. 4

<table>
<tr><td colspan="2" align="center"><strong>INTERNATIONAL SEARCH REPORT</strong></td><td>International application No.<br>PCT/JP2009/006686</td></tr>
</table>

**A.   CLASSIFICATION OF SUBJECT MATTER**
*H04W28/18(2009.01)i*

According to International Patent Classification (IPC) or to both national classification and IPC

**B.   FIELDS SEARCHED**

Minimum documentation searched (classification system followed by classification symbols)
H04W4/00-H04W99/00, H04B7/24-H04B7/26

Documentation searched other than minimum documentation to the extent that such documents are included in the fields searched
Jitsuyo Shinan Koho          1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP 2004-297118 A  (Kyocera Corp.),<br>21 October 2004 (21.10.2004),<br>claims 6, 7<br>(Family: none) | 1-13 |
| X | JP 2004-363712 A  (Matsushita Electric Industrial Co., Ltd.),<br>24 December 2004 (24.12.2004),<br>paragraphs [0035] to [0039]<br>(Family: none) | 1-13 |

☐  Further documents are listed in the continuation of Box C.        ☐   See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 January, 2010 (07.01.10) | Date of mailing of the international search report<br>19 January, 2010 (19.01.10) |
|---|---|
| Name and mailing address of the ISA/<br>    Japanese Patent Office | Authorized officer |
| Facsimile No. | Telephone No. |

Form PCT/ISA/210 (second sheet) (April 2007)

EP 2 360 963 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007221357 A

- JP 2008320862 A